# EUROPÄISCHE PATENTSCHRIFT

(11) **EP 2 238 681 B1**
(45) Veröffentlichungstag und Bekanntmachung des Hinweises auf die Patenterteilung: **18.01.2012**
(21) Anmeldenummer: 08867522.8
(22) Anmeldetag: 03.11.2008
(51) Int. Cl.: H02P 7/28

(54) **MOTORKENNGRÖSSEN-DETEKTOR UND VERFAHREN ZUM BEREITSTELLEN EINES DREHZAHL-DETEKTIONSSIGNALS UND/ODER EINES DREHMOMENT-DETEKTIONSSIGNALS**
MOTOR VARIABLE DETECTOR AND METHOD FOR PROVIDING A SPEED DETECTION SIGNAL AND/OR A TORQUE DETECTION SIGNAL
DÉTECTEUR DE GRANDEURS CARACTÉRISTIQUES D'UN MOTEUR, ET PROCÉDÉ POUR FOURNIR UN SIGNAL DE DÉTECTION DE VITESSE DE ROTATION ET/OU UN SIGNAL DE DÉTECTION DE COUPLE DE ROTATION

(30) Priorität: 27.12.2007 DE 102007062721
(43) Veröffentlichungstag der Anmeldung: 13.10.2010
(73) Patentinhaber: Robert Bosch GmbH, 70442 Stuttgart (DE)
(72) Erfinder: SINGLE, Ulrich, Penang 11900 (MY)
(86) Internationale Anmeldenummer: PCT/EP2008/064862
(87) Internationale Veröffentlichungsnummer: WO 2009/083313

(56) Entgegenhaltungen:
- WO-A-98/40945
- DE-A1- 4 115 295
- DE-A1- 19 603 114
- DE-A1-102005 062 864

## Beschreibung

### Technisches Gebiet

Die vorliegende Erfindung betrifft einen Motorkenngrößen-Detektor gemäß Anspruch 1 sowie ein Verfahren zum Bereitstellen eines Drehzahl-Detektionssignals oder eines Drehmoment-Detektionssignals gemäß Anspruch 7.

### Stand der Technik

Beim Einsatz von elektrischen Maschinen wird immer häufiger gewünscht, die Drehzahl oder ein Belastungsmoment des Elektromotors zu erfassen. Dies resultiert aus dem Wunsch, die Sicherheit beim Betrieb der elektrischen Maschinen zu erhöhen, indem beispielsweise sicherheitskritische Zustände der Maschine (wie beispielsweise ein Blockieren des Elektromotors) eindeutig erkannt werden können und darauf reagiert werden kann.

In der Vergangenheit wurden solche sicherheitskritische Zustände oftmals durch die Erfassung der Drehzahl eines Elektromotors realisiert. Ein Beispiel für eine solche (analoge) Erfassung der Drehzahl wurde bereits im Jahr 1972 von der Firma Bosch zum Patent angemeldet. Hierbei wurde ein brückengesteuerter Drehzahl-Drehmomentregler für Universal-Hauptschlussmotoren mit Wechselstrom-Vollwellenspeisung verwendet. Dabei werden die Ankerspannung und der Motorstrom mit Hilfe einer Brückenschaltung ausgewertet und für eine Drehzahlregelung verwendet.

Als Stand der Technik kann auch eine Realisierung betrachtet werden, die eine Istwerterfassung (d.h. Drehzahlerfassung) einer Regelschleife zur Steuerung eines Elektromotors mit Hilfe einer Tachoscheibe, einem Hallsensor oder einem Inkrementalgeber oder ähnlichem ermöglicht. Die Tachoscheibe oder ein entsprechender Impulsgeber wird dazu auf der Ankerwelle des Motors appliziert. Wenn sich die Motorwelle dreht, werden Tachoimpulse erzeugt, die mit Hilfe eines Sensors ausgewertet werden. Dieses Verfahren hat den Vorteil, dass der Istwert exakt erfasst wird.

Die Druckschrift DE 10 2005 062 864 offenbart eine Schaltungsanordnung und ein Verfahren zur Drehzahlregelung eines Elektromotors, wobei die Ankerspannung verwendet wird, um die Drehzahl des Elektromotors zu bestimmen. Weiterhin schlägt diese Druckschrift vor, den Motorstrom durch eine Messung des Spannungsabfalls an der Reihenschaltung aus dem Anker, einer Feldwicklungshälfte und einem Triac zu bestimmen. In dieser Druckschrift sind zwar Kennlinien dargestellt, die den Verlauf des Messspannungsabfalls in Abhängigkeit des Motorstroms und somit auch in Abhängigkeit des vom Elektromotor abgegebenen Drehmoments zeigen, es wird allerdings nicht offenbart, dass und wie ein dem Drehmoment des Elektromotors proportionales Drehmoment-Detektionssignal bestimmt werden könnte.

Die Druckschrift DE 196 03 114 offenbart eine elektrische Servolenkeinrichtung, bei welcher der Motorstrom eines Elektromotors mit Hilfe einer in Reihe mit dem Motor geschalteten Motorstromerfassungseinheit bestimmt wird. Das erfasste Motorstromsignal wird bei dieser bekannten Vorrichtung mittels eines Tiefpassfilters geglättet und zur Regelung des Elektromotors auf einen Sollwert für den Motorstrom verwendet.

Die Druckschritt DE 4115 295 offenbart eine Schaltungsanordnung zur Steuerung und Überwachung eines Laststroms zur Drehzahlregelung bei einem Gleichstrommotor.

Die Druckschrift WO 98/40945 offenbart ein Verfahren zur Steuerung der Bewegung von elektrisch betriebenen Aggregaten, wie beispielsweise Fensterhebern, Schiebedächern und dergleichen, wobei der Motorstrom eines Elektromotors bestimmt und auf einen festgelegten Maximalwert begrenzt wird.

Alle diese Ansätze gemäß dem Stand der Technik erfordern aber einen hohen schaltungstechnischen Aufwand, da sie die Verwendung von speziellen Sensor- bzw. Auswerteeinheiten vorsehen, die allein zur Auswertung der Drehzahl bestimmt sind.

Die Aufgabe der vorliegenden Erfindung besteht somit darin, eine bessere Möglichkeit zum Erkennen von sicherheitskritischen Zuständen eines Elektromotors zu schaffen.

### Offenbarung der Erfindung

Diese Aufgabe wird durch einen Motormessgrößen-Detektor gemäß den Merkmalen nach Anspruch 1 sowie durch ein Verfahren zum Bereitstellen eines Drehzahl-Detektionssignals und/oder eines Drehmoment-Detektionssignals gemäß den Schritten nach Anspruch 11 und durch ein Computerprogramm gemäß Anspruch 12 gelöst. Weitere Ausgestaltungen der Erfindung sind Gegenstand von Unteransprüchen.

Die vorliegende Erfindung schafft einen Motorkenngrößen-Detektor zum Bereitstellen eines Drehzahl-Detektionssignals und/oder eines Drehmoment-Detektionssignals eines Elektromotors, der eine Reihenschaltung aus zumindest einer Feldwicklung und einer Ankerwicklung umfasst, wobei der Elektromotor zwischen einem ersten und einem zweiten Versorgungsanschluss geschaltet ist und wobei der Motorkenngrößen-Detektor folgende Merkmale umfasst:
- eine Motorstrom-Erfassungseinheit, die ausgebildet ist, um einen Motorstrom durch den Elektromotor zu erfassen und ein entsprechendes Motorstromsignal auszugeben und/oder
- eine Ankerspannungs-Erfassungseinheit, die ausgebildet ist, um eine Ankerspannung über die Ankerwicklung des Elektromotors an einem Abgriffspunkt zwischen der Feldwicklung und der Ankerwicklung zu erfassen und ein entsprechendes Ankerspannungssignal auszugeben; und
- eine Auswerteeinheit, die ausgebildet ist, um eine Integration über das ausgegebene Motorstromsignal und/oder das ausgegebene Ankerspannungssignal durchzuführen, um einen Effektivwert für den Motorstrom und/oder einen Effektivwert für die Ankerspannung zu erhalten, wobei die Auswerteeinheit ferner ausgebildet ist, um aus dem Effektivwert des Motorstroms das dem Drehmoment des Elektromotors proportionale Drehmoment-Detektionssignal bereitzustellen und/oder aus dem Effektivwert der Ankerspannung das der Drehzahl des Elektromotors proportionale Drehzahl-Detektionssignal bereitzustellen.

Die vorliegende Erfindung basiert auf der Erkenntnis, dass sicherheitskritische Zustände aus den Motorkenngrößen Ankerspannung und/oder Motorstrom einfach erkannt und ausgewertet werden können. Hierzu werden ein Motorstrom durch den Elektromotor oder eine Ankerspannung über die Ankerwicklung des Elektromotors (oder auch der Motorstrom und die Ankerspannung parallel) erfasst und verarbeitet. Bei der Verarbeitung oder Auswertung wird zunächst ein Effektivwert für die genannten Motorkenngrößen ermittelt, der kurzzeitige Schwankungen dieser Größen unberücksichtigt lässt. Aus dem entsprechenden Effektivwert wird dann ein zur Drehzahl bzw. zum Drehmoment proportionales Detektionssignal ermittelt.

Der erfindungsgemäße Ansatz bietet den Vorteil, dass keine zusätzlichen Sensoren zur Bestimmung der Drehzahl erforderlich sind. Vielmehr kann durch Auswertung der einfach erfassbaren Motorkenngrößen, wie der Ankerspannung und/oder des Motorstroms, ein Rückschluss auf die aktuelle Drehzahl oder das aktuelle Drehmoment gezogen werden. Die Auswerteeinheit kann dabei derart gestaltet sein, dass auch weitere Funktionen durch diese Auswerteeinheit erfüllt werden, so dass die Verwendung einer speziellen analogen Schaltung nur zur Aufbereitung der erfassten Ankerspannung vermieden werden kann. Dies reduziert den schaltungstechnischen Aufwand.

In einer speziellen Ausführungsform kann die Auswerteeinheit ausgebildet sein, um das ausgegebene Ankerspannungssignal und/oder das ausgegebene Motorstromsignal mit einer vordefinierten Abtastfrequenz abzutasten und die Integration mit Mitteln der digitalen Signalverarbeitung auszuführen. Dies bietet eine deutlich vereinfachte Möglichkeit der Auswertung, da mittlerweile in elektronischen Geräten bereits spezielle digitale Bausteine verwendet werden, die zur Auswertung des Motorstromes und/oder der Ankerspannung mit verwendet werden können. Dies wiederum bietet den Vorteil einer schaltungstechnischen Vereinfachung, einhergehend mit einer Reduktion der Herstellungskosten.

Weiterhin kann die Auswerteeinheit ausgebildet sein, um für die Integration eine Interpolation der abgetasteten Werte des Ankerspannungssignals und/oder des Motorstromsignals durchzuführen und die Integration unter Verwendung von sich durch die Interpolation ergebenden trapezförmigen Strukturen zwischen den interpolierten abgetasteten Ankerspannungssignal- und/oder Motorstromsignalwerten und Bezugswerten auszuführen. Eine solche Ausführungsform der vorliegenden Erfindung bietet den Vorteil einer einfachen und daher schnell durchzuführenden digitalen Verarbeitung der empfangenen Signale in der Auswerteeinheit, so dass die Auswerteeinheit durch die zusätzliche Funktion wenig in Anspruch genommen wird. Dies reduziert im Betrieb die Verarbeitungszeit und Leistungsaufnahme des Motorkenngrößen-Detektors.

Günstig ist es auch, dass, wenn der Elektromotor eine Reihenschaltung aus der Feldwicklung, der Ankerwicklung und einer zweiten Feldwicklung umfasst, die Ankerspannungs-Erfassungseinheit ausgebildet ist, um die Ankerspannung zwischen dem ersten Versorgungsanschluss und einem Abgriffspunkt im Elektromotor zu erfassen, der zwischen der Ankerwicklung und der zweiten Feldwicklung angeordnet ist. In dieser Ausführungsform kann (gegenüber einem direkten Abgriff der Ankerspannung vor und nach der Ankerwicklung im Elektromotor) ein einziger Abgriffspunkt der Ankerspannung im Elektromotor vorgesehen sein, was die Konstruktion und Herstellung eines solchen Motors erleichtert und kostengünstiger macht. Es wurde erkannt, dass ein Spannungsabfall, der über die Feldwicklung abfällt, vernachlässigbar ist und somit keine relevante Verschlechterung der Drehzahlbestimmung verursacht.

In einer weiteren Ausführungsform kann die Auswerteeinheit ferner ausgebildet sein, um eine zwischen dem ersten Versorgungsanschluss und dem zweiten Versorgungsanschluss anliegende Versorgungsspannung zu erfassen und unter Verwendung der erfassten Versorgungsspannung einen Spannungsabfall über die Feldwicklung zu bestimmen. Dies ist insbesondere dann vorteilhaft, wenn ein symmetrischer Elektromotor verwendet wird, bei dem die Einflüsse der ersten und zweiten Feldwicklung nahezu gleich sind. Eine derartige Ausführungsform bietet dann nämlich die Möglichkeit, eine Differenz zwischen der erfassten Versorgungsspannung und der (über die Feldwicklung mit erfassten) Ankerspannung zu bestimmen, die dann dem Einfluss der zweiten Feldwicklung des Elektromotors entspricht. Wenn der symmetrische Elektromotor verwendet wird, kann dadurch der Effekt auch der Feldwicklung bestimmt werden und bei der Bestimmung der Ankerspannung bzw. des Ankerspannungssignals entsprechend kompensiert werden.

In einer weiteren Ausführungsform kann zwischen den ersten Versorgungsanschluss und den Elektromotor ein Phasenanschnitt-Schalter geschaltet sein. Hierbei kann die Auswerteeinheit des Motorkenngrößen-Detektors ausgebildet sein, um einen Spannungsabfall zwischen dem ersten Versorgungsanschluss und dem Elektromotor zu bestimmen und diesen bestimmten Spannungsabfall bei dem Bereitstellen des Drehmoment-Detektionssignals und/oder des Drehzahl-Detektionssignals zu verwenden. Insbesondere dann, wenn eine digitale Auswerteeinheit verwendet wird, kann über die Erkennung des Spannungsabfalls zwischen dem ersten Versorgungsanschluss und dem Elektromotor ein Durchschalten oder Sperren des Phasenanschnitt-Schalters erkannt werden, der zwischen entsprechenden Taktflanken des Abtasttakts liegt. Bei der Bestimmung des Ankerspannungssignals und/oder des Motorstromsignals kann dann eine entsprechende Kompensation erfolgen, so dass eine höhere Präzision des Drehzahl-Detektionssignals und/oder des Drehmoment-Detektionssignals möglich wird. Auch kann in einer weiteren Ausführungsform die Ankerspannungs-Erfassungseinheit ausgebildet sein, um unter Verwendung des Potentials des ersten Versorgungsanschlusses ein Potential einer virtuellen Masse bereitzustellen und die Ankerspannung und/oder den Motorstrom in Bezug auf das Potential der bereitgestellten virtuellen Masse zu erfassen. Dies bietet die Möglichkeit, nicht nur eine positive Halbwelle eines Wechselspannungssignals zu erfassen, sondern durch das Erfassen in Bezug auf den DC-Offset der virtuellen Masse eine positive und negative Halbwelle, d.h. eine Vollwelle auswerten zu können. Hierdurch wird ebenfalls eine deutlich höhere Präzision des Drehzahl-Detektionssignals und/oder des Drehmoment-Detektionssignals möglich.

Gemäß einer anderen Ausführungsform kann auch die Auswerteeinheit ausgebildet sein, um das Drehmoment-Detektionssignal unter Verwendung des ausgegebenen Ankerspannungssignals und des ausgegebenen Motorstromsignals bereitzustellen oder das Drehzahl-Detektionssignal unter Verwendung des ausgegebenen Ankerspannungssignals und des ausgegebenen Motorstromsignals bereitzustellen. Durch die Verwendung der beiden erfassten Messgrößen kann ebenfalls eine Erhöhung der Präzision bzw. der Aussagezuverlässigkeit erreicht werden, da evtl. Fehlmessungen der ersten Messgröße durch die Ergebnisse der Messung der zweiten Messgröße kompensiert werden können.

In einer anderen Ausführungsform der vorliegenden Erfindung kann die Ankerspannungs-Erfassungseinheit ausgebildet sein, um beim Ermitteln des Ankerspannungssignals eine Spannungsteilung der erfassten Ankerspannung und eine Impedanzwandlung durchzuführen. Dies ist insbesondere bei der Verwendung von empfindlichen digitalen Schaltkreisen als Auswerteeinheit günstig, da hierdurch die meist hohen Ströme und Spannungen beim Betrieb des Elektromotors einfach auf die Spannung und Eingangsimpedanzen der digitalen Bauelemente gebracht werden können.

Gemäß einem weiteren Aspekt der vorliegenden Erfindung kann ein Motorregler vorgesehen sein, der folgende Merkmale umfasst:
- einen Motorkenngrößen-Detektor gemäß einer der vorstehend beschriebenen Ausführungsformen;
- einen Regler, der ausgebildet ist, um auf der Basis des bereitgestellten Drehzahl-Detektionssignals und/oder des bereitgestellten Drehmoment-Detektionssignals den Elektromotor entsprechend einer vorgegebenen Regelcharakteristik zu regeln.

Dies bietet den Vorteil, dass die einfach erhaltenen Messgrößen durch den Regler zur Regelung des Elektromotors eingesetzt werden können, wobei vorteilhaft auch gleich die Auswerteeinheit die Funktion des Reglers mit übernehmen kann. Bei der Verwendung von digitalen Bausteinen (die bereits häufig in Elektromotoren vorhanden sind) als Auswerteeinheit ist die Realisierung des Reglers auch einfach und kostengünstig möglich.

Gemäß einer anderen Ausführungsform der Erfindung ist ein Verfahren zum Bereitstellen eines Drehzahl-Detektionssignals und/oder eines Drehmoment-Detektionssignals eines Elektromotors vorgesehen, das eine Reihenschaltung aus zumindest einer Feldwicklung und einer Ankerwicklung umfasst, wobei der Elektromotor zwischen einem ersten und einem zweiten Versorgungsanschluss geschaltet ist und wobei das Verfahren folgende Schritte umfasst:
- Erfassen eines Motorstroms durch den Elektromotor und Ausgeben eines entsprechenden Motorstromsignals und/oder
- Erfassen einer Ankerspannung über die Ankerwicklung des Elektromotors an einem Abgriffspunkt zwischen der Feldwicklung und der Ankerwicklung und Ausgeben eines entsprechenden Ankerspannungssignals; und
- Auswerten des Motorstromsignals und/oder des Ankerspannungssignals, um eine Integration über das ausgegebene Motorstromsignal und/oder das ausgegebene Ankerspannungssignal durchzuführen, um einen Effektivwert für den Motorstrom und/oder einen Effektivwert für die Ankerspannung zu erhalten und um aus dem Effektivwert des Motorstroms das zu dem Drehmoment des Elektromotors proportionale Drehmoment-Detektionssignal bereitzustellen und/oder aus dem Effektivwert der Ankerspannung das zu der Drehzahl des Elektromotors proportionale Drehzahl-Detektionssignal bereitzustellen.

Weiterhin kann auch ein Computerprogramm mit Programmcode zur Durchführung des beschriebenen Verfahrens vorgesehen sein, wenn das Computerprogramm auf einem Computer ausgeführt wird. Zumindest kann aber der Schritt des Auswertens vorteilhaft in einem Computer implementiert werden.

### Kurze Beschreibung der Zeichnungen

Die Erfindung wird nachstehend anhand der beigefügten Zeichnungen beispielhaft näher erläutert. Es zeigen:
- Fig. 1: ein Blockschaltbild eines Ausführungsbeispiels der vorliegenden Erfindung;
- Fig.2: ein Prinzipschaltbild einer Gleichstrom-Reihenschlussmaschinel Universalmotor mit den Motorgrößen Motorstrom (I_{Motor}) und Ankerspannung (U_{Armature});
- Fig. 3: ein Blockschaltbild zur Erfassung von Messgrößen an einem Elektromotor, die für einen digitalen U/I-Regler verwendet werden können;
- Fig. 4: eine Schaltungsstruktur eines Ausführungsbeispiels einer Schaltung zur Aufbereitung der erfassten Messgrößen, die für einen digitalen Spannungs-Strom Regler (U/I-Regler) verwendet werden können;
- Fig. 5a bis 5f: Diagramme von unterschiedlichen Signalverläufen beim Betrieb der in Fig. 4 dargestellten Schaltungsstruktur;
- Fig. 6: ein regelungstechnisches Ersatzschaltbild eines digitalen U/I-Reglers; und
- Fig. 7: ein Ablaufdiagramm eines Ausführungsbeispiels der Erfindung in Form eines Verfahrens.

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen dar.

### Ausführungsformen der Erfindung

Bei modernen Elektrogeräten oder Elektrowerkzeugen wird eine Elektronik verwendet, um die Regelung, Leistungssteigerung, Schutzfunktionen oder Zusatzfunktionen zu realisieren. Die Elektronik in modernen Elektrowerkzeugen ist daher häufig mit einem Mikrokontroller ausgestattet, mit dessen Hilfe diese Funktionen realisiert werden. Zur Realisierung einer Drehzahlregelung in einem Elektrogerät ist meist ein geschlossener Regelkreis erforderlich. Für die Realisierung eines geschlossenen Regelkreises in einem Elektrogerät z.B. einem Elektrowerkzeug ist eine Istwerterfassung nötig, die in herkömmlichen Ansätzen meist als Tacho realisiert ist, der auf der Welle eines Elektromotors angebracht ist.

Der erfindungsgemäße Ansatz verwendet Ersatzgrößen, mit deren Hilfe ein zu der Drehzahl proportionaler Wert oder/und einer zur Belastung der Maschine proportionaler Wert generiert werden kann. Als Ersatzgrößen werden speziell die Motormessgrößen Ankerspannung und Motorstrom verwendet.

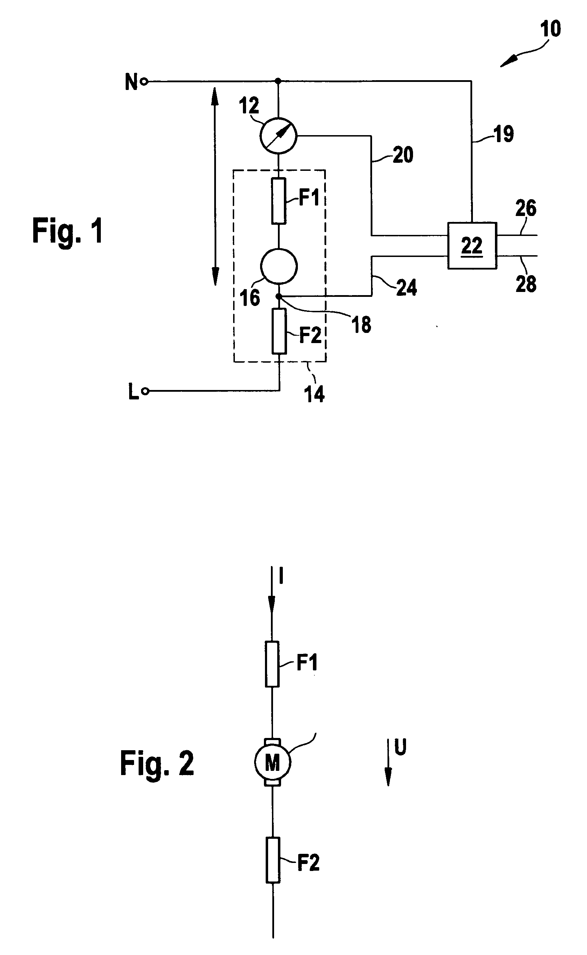

Fig. 1 zeigt ein Blockschaltbild eines Ausführungsbeispiels der vorliegenden Erfindung. Der in Fig. 1 dargestellte Motorkenngrößen-Detektor 10 umfasst eine Motorstrom-Erfassungseinheit 12 sowie einen Elektromotor 14, die in Reihe zwischen einen ersten Versorgungsanschluss N und einen zweiten Versagungsanschluss L geschaltet sind. Der Elektromotor 14 besteht dabei aus zumindest einer Feldwicklung auf F1 (im vorliegenden Fall jedoch aus 2 Feldwicklungen F1 und F2), zwischen die der drehbare Anker mit der Ankerwicklung 16 geschaltet ist. Die Feldwicklungen können beispielsweise als diejenigen Wicklungen des Elektromotors angesehen werden, die das elektromagnetische Feld bereitstellen, in dem sich die Ankerwicklung 16 drehen kann. Die Ankerwicklung 16 ist ferner mit einer Ankerspannungs-Erfassungseinheit 18 verbunden, die beispielsweise aus einem Abgriffspunkt zwischen der Ankerwicklung 16 und der zweiten Feldwicklung F2 bestehen kann. An der Ankerspannungs-Erfassungseinheit 18 kann als Ankerspannung entweder ein Spannungsabfall nur über die Ankerwicklung 16 selbst (mit einem weiteren Abgriffspunkt zwischen der ersten Feldwicklung F1 und der Ankerwicklung 16) erfasst werden. Alternativ kann auch andererseits ein Spannungsabfall zwischen dem ersten Versorgungsanschluss N (über die Hilfsleitung 19) und dem Abgriffpunkt 18 (wie dies in Figur 1 dargestellt ist) erfasst werden.

Die Motorstrom-Erfassungseinheit 12 ist ferner ausgebildet, um den Strom durch den Elektromotor 14 zu messen und ein entsprechendes Motorstromsignal 20 an eine Auswerteeinheit 22 zu liefern, wobei die Auswerteeinheit 22 ebenfalls ein der Ankerspannung entsprechendes Ankerspannungssignal 24 von der Ankerspannungs-Erfassungseinheit 18 empfangen kann. In der Auswerteeinheit 22 wird dann mittels Integration der Effektivwert des Motorstromsignals 20 und/oder der Effektivwert des Ankerspannungssignals 24 ermittelt und ein der Belastung des Elektromotors 14 entsprechendes Drehmoment-Detektorsignal 26 aus dem Effektivwert des Motorstromsignals 20 und/oder ein der Drehzahl des Elektromotors 14 entsprechendes Drehzahl-Detektorsignal 28 aus dem Effektivwert des Ankerspannungssignals 24 ermittelt und entsprechend ausgegeben.

Bei der Bestimmung des Drehmoment-Detektorsignals 26 wird ausgenutzt, dass bei einer hohen Belastung des Elektromotors 14 ein gegenüber einer niedrigeren Belastung des Elektromotors 14 größerer Strom fließt. Analog wird bei der Bestimmung des Drehzahl-Detektorsignals 28 ausgenutzt, dass die Ankerwicklung 16 bei einer höheren Drehzahl eine größere Ankergegenspannung induziert, als bei niedrigerer Drehzahl, so dass die über die Ankerwicklung 16 abfallende Spannung als Messgröße für die Drehzahl verwendet werden kann.

Weiterhin kann in einem Ausführungsbeispiel der vorliegenden Erfindung jedoch auch entweder nur der Motorstrom oder nur die Ankerspannung abgegriffen, allein in der Auswerteeinheit 22 ausgewertet und entsprechend als Drehmoment-Detektorsignal 26 bzw. Drehzahl-Detektorsignal 28 ausgegeben werden. Eine Erfassung sowohl des Motorstroms als auch der Ankerspannung ist daher gemäß der vorliegenden Erfindung nicht zwingend erforderlich. Die Qualität der erzielten Detektionssignale 26 und 28 wird jedoch durch die (kombinierte) Auswertung der beiden erfassten Messgrößen deutlich besser. Dabei kann beispielsweise eine Plausibilitätsabschätzung und/oder ein Vergleich mit vorgegebenen Referenzwerten für ein Drehzahl-Drehmoment-Verhältnis (bzw. ein Motorstrom-DrehzahlVerhältnis) zwischen dem bestimmten Drehmoment (bzw. dem Motorstrom) und der bestimmten Drehzahl (bzw. der Ankerspannung) erfolgen, so dass festgestellt werden kann, ob eine Messung der beschriebenen Messgrößen ungenau oder falsch ist.

Durch neue digitale Mikrocontroller (µC) oder digitale Signalprozessoren (DSP) ergeben sich dabei im Bereich der Drehzahlregelung von Elektrogeräten mit einem Reihenschlussmotor ganz andere Ansätze, um die Messgrößen Ankerspannung und Motorstrom auswerten zu können. Dies kann insbesondere dann ausgenutzt werden, wenn für die Auswerteeinheit 22 ein digitaler elektronischer Baustein verwendet wird, wie dies nachfolgend näher dargestellt wird.

Gemäß einem Ausführungsbeispiel können hierzu die Motormessgrößen Ankerspannung und Motorstrom zyklisch abgetastet (sampled) werden und mit einem Mikrocontroller (µC) oder digitalem Signalprozessor (DSP) ausgewertet werden.

Die Messgrößen "Ankerspannung" und "Motorstrom" können zuvor auch durch eine spezielle Analogschaltung aufbereitet und den analog-digital Wandlerkanälen (A/D-Wandler) zur Verfügung gestellt werden.

Vorteile gegenüber den bestehenden analogen Verfahren ergeben sich unter anderem durch die schnellere Anpassbarkeit an neue Motoren, bessere Regeleigenschaften, geringerer Bauteilaufwand, vereinfachtes Versorgungsspannungskonzept und dadurch bedingt geringere Kosten. Außerdem können Zusatzfunktionen, die z.B. einen µC, DSP, ASIC (ASIC = Application Specific Integrated Circuit = anwendungsspezifische integrierte Schaltung), FPGA (FPGA = Field Programmable Gate Array) oder ein ähnliches digitales Steuer-IC (IC = integrated circuit = integrierte Schaltung) benötigen, realisiert werden.

Das nachfolgend beschriebene Ausführungsbeispiel der Erfindung offenbart einen Ansatz zur Erfassung und Auswertung der Motorgrößen "Ankerspannung" und "Motorstrom" insbesondere bei einem Reihenschlussmotor mit Hilfe eines µC (µC = Mikrocontroller), eines DSP (DSP = Digitaler Signal-Prozessor), einer anwendungsspezifischen integrierten Schaltung (= ASIC), einen programmierbaren E-lektronikbaustein (PAL = Programmable Array Logic), einem frei programmierbaren Logikschaltkreis (FPGA) oder einem ähnlichen Bauteil.

In Fig. 2 wird das Prinzipschaltbild der GleichstromReihenschlussmaschine/Universalmotor für die nachfolgende Beschreibung nochmals dargestellt. Für das offenbarte Verfahren sollen die physikalischen Motorgrößen Ankerspannung und Motorstrom erfasst und ausgewertet werden.

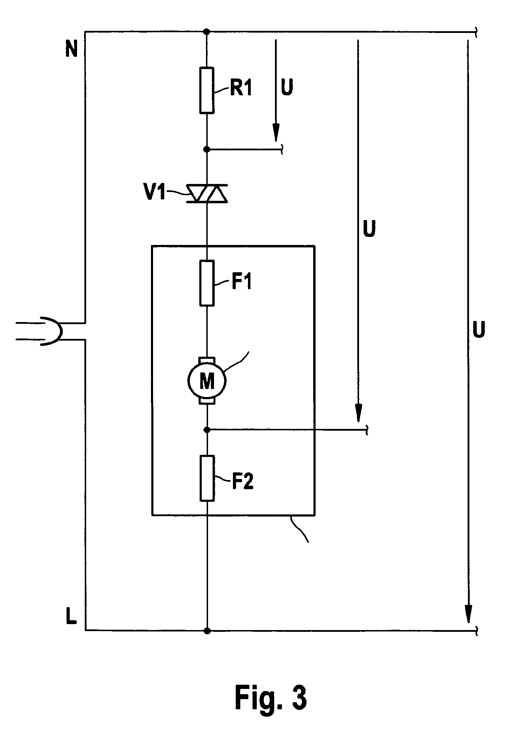

Um eine einfache Verdrahtung an einem Elektrowerkzeug und eine einfache Auswerteschaltung realisieren zu können, bietet es sich an, die in Fig. 3 dargestellten Messgrößen zu erfassen. Es handelt sich um die Messgrößen U_{Shunt}, U_{Armature} und U_{Mains}.

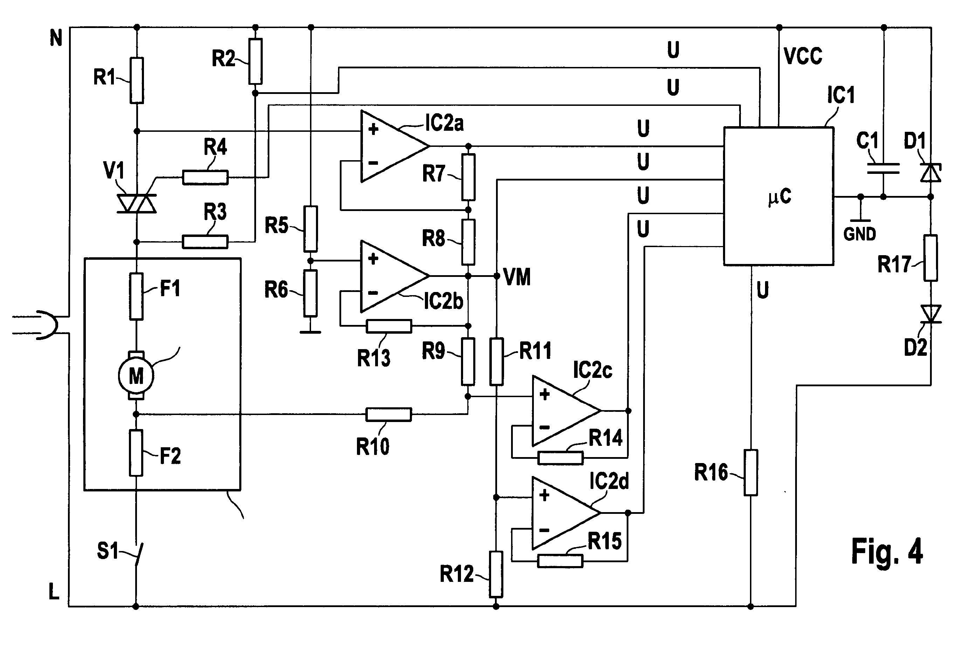

Die Messgrößen können dazu in einer Schaltungsstruktur entsprechend der Fig. 4 aufbereitet und dem Auswertebaustein (IC1), z.B. einem Mikrocontroller µC, zur Verfügung gestellt werden.

Der digitale Spannungs-Strom-Regler, für den die Messgrößen erfasst werden können, wird im Folgenden mit "digitaler U/I-Regler" abgekürzt. Die erfassten Messgrößen müssen dabei jedoch nicht zwingend in einem solchen Regler eingesetzt werden; vielmehr können sie auch für andere Zwecke erfasst werden.

Die Schaltungsstruktur gemäß der Fig. 4 und deren Funktion wird nachfolgend näher beschrieben:
- Der Motorstrom wird über den Spannungsabfall am Shunt R1 erfasst
- Der Spannungsfall an R1 wird über den nicht invertierenden Verstärker, bestehend aus IC2a, R7 und R8 verstärkt und dem Auswertebaustein IC1 als analoge Spannung U_{Shunt} bereitgestellt. R8 wird dabei auf den virtuellen Massepunkt VM als Bezugsspannung gelegt. Der virtuelle Massepunkt kann nützlich sein, um einen positiven und negativen Spannungsfall an R1 auswerten zu können. Ein positiver und negativer Spannungsabfall am Shunt R1 entsteht in der positiven und negativen Netzhalbwelle.
- Der virtuelle Massepunkt VM wird mit dem Impedanzwandler IC2b, R5, R6, R13 erzeugt. Über den Spannungsteiler R5 und R6 kann der virtuelle Massepunkt z.B. auf die halbe Versorgungsspannung des Auswertebausteins gelegt werden. In diesem Fall wird R5 = R6 gewählt. Der virtuelle Massepunkt VM kann in Form einer Referenzspannung dem Auswertebaustein IC1 als analoge Spannung U_{Ref}bereitgestellt werden.
- Eine der Ankerspannung entsprechende Spannung wird am Reihenschlussmotor direkt am Anker abgegriffen (bzw. zwischen Ankerwicklung und der zweiten Feldwicklung Field 2). Hierzu ist nur eine zusätzliche Leitung von der Elektronik (z.B. dem µC) zum Reihenschlussmotor erforderlich. Im Schaltbild aus Fig. 4 ist der Abgriff am Anker der Anschlusspunkt von R10 am Anker. Das Bezugspotential bildet hierbei der Versorgungsanschluss Mains N. Die Spannung wird durch den Spannungsabfall am Shunt R1, am Triac V1 und am Feld F1 verfälscht. In der Praxis zeigt sich jedoch, dass dieser Fehler durch geeignete Verfahren im Regler korrigiert werden kann.
- Natürlich kann die Ankerspannung auch direkt über den Anker abgegriffen werden und beispielsweise über einen Differenzverstärker ausgewertet werden. Dies erfordert aber zwei Leitungen zum Motor und einen höheren Aufwand an Bauteilen in der Auswerteschaltung. Obwohl dieses Prinzip für die erfindungsgemäße Auswertung ebenfalls verwendet werden kann, wird dies der Einfachheit halber in den folgenden Betrachtungen nicht mehr näher beschrieben.
- Die annähernd der Ankerspannung entsprechende Spannung wird über den Spannungsteiler aus R10 und R9 heruntergeteilt und auf den virtuellen Massepunkt VM geführt. Der virtuelle Massepunkt VM bildet hierbei einen DC-Offset. Ein DC-Offset ist, wie bei der Strommessung, erforderlich, damit die Ankerspannung in der positiven und negativen Netzhalbwelle erfasst werden kann. Das herunter geteilte Signal wird als analoge Spannung U_{Armature} dem Auswertebaustein IC1 zur Verfügung gestellt.
- Um die Regeleigenschaften von der Netzspannung (U_{Mains}) zu entkoppeln, sollte die Netzspannung mit erfasst werden. Dazu kann die Netzspannung über den Spannungsteiler bestehend aus R12 und R11 geteilt und auf den virtuellen Massepunkt VM gelegt werden, wie dies in Fig. 4 dargestellt ist. Der virtuelle Massepunkt VM bildet auch hier einen DC-Offset, um die Signale in der positiven und negativen Netz-Halbwelle erfassen zu können. Das herunter geteilte Signal wird dem Auswertebaustein IC1 als Analogspannung U_{Mains} zur Verfügung gestellt.
- Über den Spannungsteiler aus R3 und R2 wird das optionale Signal U_{Switch} gebildet. Das Signal U_{Switch} kann dazu verwendet werden, das Schalten von S1 zu erkennen und auszuwerten. Wird der Schalter S1 geschlossen und ist der Triac V1 nicht leitend, wird dem Auswertebaustein IC1 ein zur Netzspannung proportionales Signal U_{Switch} bereitgestellt. Optional kann über das Signal U_{Switch} auch das Verlöschen des Triacs erkannt werden. Das Verlöschen des Triacs tritt ein, wenn der Haltestrom des Triacs unterschritten wird und der Triac in den nicht leitenden Zustand übergeht. Dazu muss der Schalter S1 geschlossen sein und der Triac in der positiven Halbwelle gezündet werden. In der negativen Halbwelle ist das Verlöschen des Triacs dann anhand eines Spannungssprungs am Signal U_{Switch} erkennbar. Dies ist nur möglich, wenn es einen maschinenspezifischen Nachlauf gibt. Der Spannungssprung entsteht, da der Spannungsteiler bei leitendem Triac V1 nahezu auf dem Potential N liegt. Wenn der Triac in den nicht leitenden Zustand übergeht, springt die Spannung am Spannungsteiler aus R3 und R2 über S1 und Motor nahezu auf das Potential L. Das Signal U_{Switch} ist optional, kann aber sehr leicht mit einem analogen oder digitalen Eingang des Auswertebausteins IC1 erfasst und ausgewertet werden. Das erfindungsgemäße Verfahren ist jedoch prinzipiell auch ohne dieses Signal möglich.
- Damit stehen dem Auswertebaustein IC1 alle für die Regelung relevanten analogen Signale zur Verfügung. Die relevanten analoge Signale sind insbesondere: U_{Shunt}, U_{Ref}, U_{Armature}, U_{Mains} und optional U_{Switch}
- Die Versorgungsspannung für den Baustein IC1 wird über das Netzteil, bestehend aus Kondensator C1, Zehnerdiode D1, Vorwiderstand R17 und Gleichrichtdiode D2, erzeugt. Hierbei handelt es sich um ein sehr einfaches Netzteil. Nachteil dieses Netzteilprinzips ist eine mögliche relativ hohe Restwelligkeit (Ripple). Für eine präzisere Messung der relevanten Motorgrößen U_{Amature} und I_{Motor} ist ein Netzteil mit geringerer Restwelligkeit (Ripple) erforderlich. Auf das Netzteil und gegebenenfalls auf eine Variation des Netzteils soll in dieser Beschreibung jedoch nicht näher eingegangen werden.
- Das Erfassen der relevanten analogen Signale sowie das Zünden des Triacs sollten netzsynchron erfolgen. Hierzu werden die Netznulldurchgänge über R16 erfasst und als Spannung U_{Sync} dem Baustein IC1 zur Verfügung gestellt.
- Der Triac V1 wird über den Vorwiderstand R4 und einen digitalen Ausgang von Baustein IC1 gezündet.

Zu der Schaltungsstruktur aus Fig. 4 ist weiterhin anzumerken, dass viele Schaltungsteile mit Operationsverstärkern vereinfacht dargestellt werden, da durch die Verwendung von Operationsverstärkern das Verstehen des Funktionsprinzips der Schaltung wesentlich erleichtert wird. Die Schaltungsstruktur aus Fig. 4 gibt also eine mögliche Realisierung wieder. Die vorliegend beschriebene Lösung kann jedoch auch andere Schaltungsteile mit aktiven Bauteilen wie z.B. Transistoren oder passiven Bauteilen wie z.B. Widerstände und Kondensatoren umfassen, um die Schaltungsstruktur weiter zu vereinfachen. Die in Fig. 4 dargestellte Schaltungsstruktur soll nur die wesentlichen Eigenschaften und das Funktionsprinzip der Schaltungsstruktur wiedergeben.

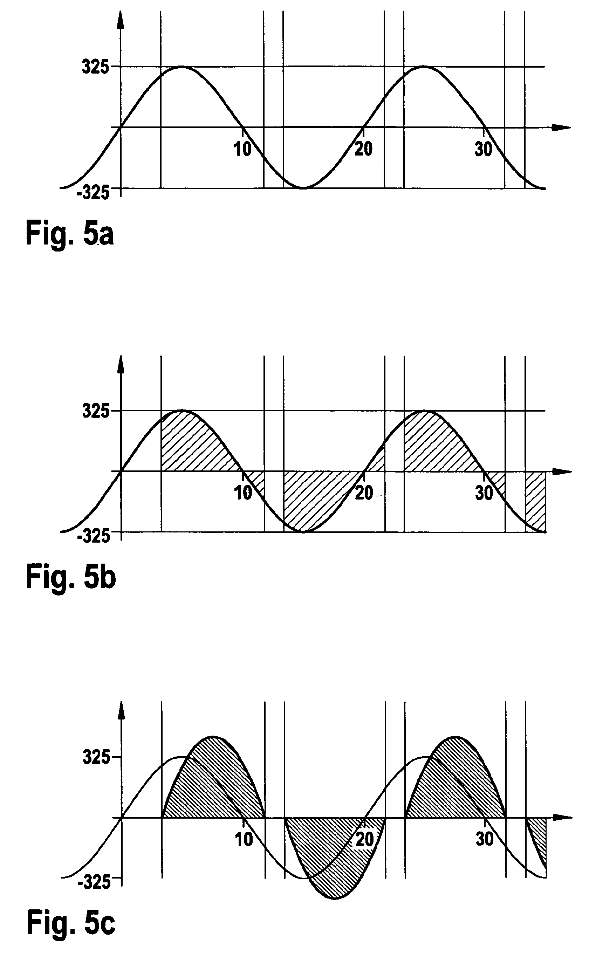

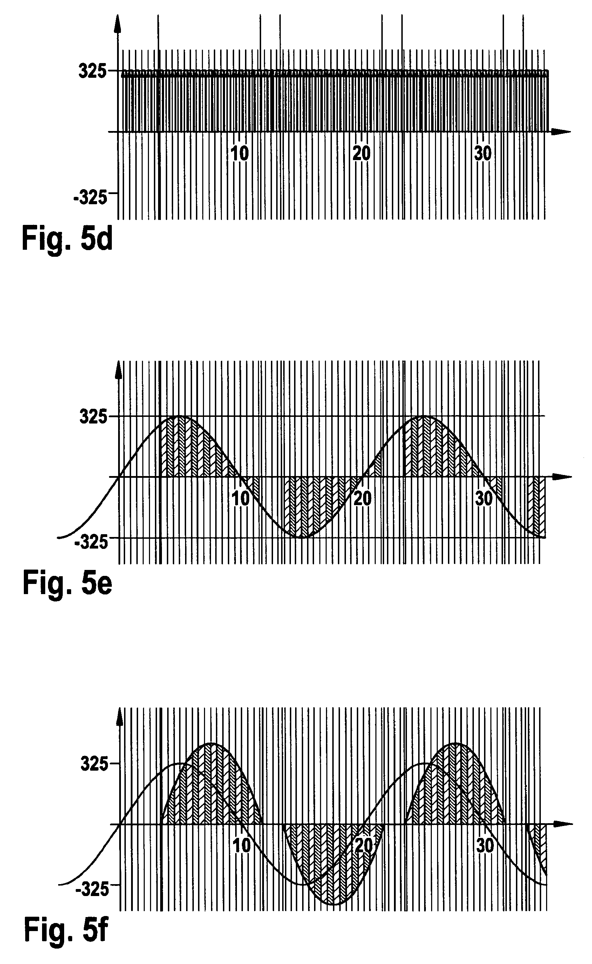

Die für die in Fig. 4 offenbarte Schaltungsstruktur relevanten Spannungen und Signale sind in Fig. 5 dargestellt. Um einen konkreten Bezug zur Praxis herstellen zu können, wurde als Anwendungsbeispiel eine sinusförmige AC-Netzspannung mit 230V und 50Hz gewählt. Natürlich ist das erfindungsgemäße Verfahren auch mit anderen Netzspannungen, Frequenzen oder Netzspannungsformen möglich.

In den einzelnen Teilfiguren aus Fig. 5 sind die nachfolgend näher beschriebenen Signalverläufe wiedergegeben:
- **Netzspannung:** Fig. 5a: Es ist eine sinusförmige Netzspannung mit 230V AC und 50Hz dargestellt.
- Spannung an Last: Fig. 5b: Dieses Diagramm zeigt die Spannung an der Last. In Fig. 3 ist die Last als Gleichstromreihenschlussmotor dargestellt. Die Last "sieht" eine phasenangeschnittene Spannung. Der Phasenanschnitt erfolgt bei einem Phasenwinkel von ca. 60° Grad, d.h. bei einem Phasenwinkel von ca. 60° Grad wird der Triac gezündet und wird leitend.
- **Strom an Last:** Fig. 5c: Diese Figur gibt den idealisierten Strom an der Last wieder. Der Stromfluss setzt ein, nachdem der Triac leitend ist. Der Triac bleibt leitend bis der Triac-Haltestrom unterschritten wird. Der Haltestrom wird nach dem Netznulldurchgang und einem maschinenspezifischen Nachlauf unterschritten. Der Nachlauf entsteht bei einer induktiven Last durch die Phasenverschiebung zwischen Strom und Spannung und wird im Folgenden als cos ϕ bezeichnet. Der Nachlauf cos ϕ ist maschinenspezifisch und belastungsabhängig. In Fig. 5c ist ein Nachlauf cos ϕ von ca. 30° Grad dargestellt.
- **Periodischer Interrupt:** Fig. 5d: In dieser Figur ist ein Rechtecksignal mit einer Frequenz von 750Hz dargestellt. Die positive Flanke ist mit einem Pfeil markiert. Bei der positiven Flanke wird ein Interrupt generiert. Nach dem Interrupt können z.B. Messgrößen eingelesen werden. Dieses Signal wird nur als Hilfsgröße verwendet, um das Abtastverfahren anschaulicher darstellen zu können, und kann auch rein intern im Baustein IC1 (siehe Fig. 4) generiert werden.
- **Abgetastete Netzspannung:** Fig. 5e: Diese Figur zeigt die "Spannung an der Last", aus Fig. 5b, jedoch als "abgetastete Spannung". Ziel ist es, aus der abgetasteten Spannung an der Last den Effektivwert der Spannung oder eine zum Effektivwert proportionale Messgröße an der Last möglichst genau zu erfassen. Der Effektivwert kann der quadratische Mittelwert der Spannung an der Last sein. Für die Berechnung z.B. des Effektivwertes sollte das Integral über eine Halbwelle/Vollwelle gebildet werden. Der hier vorgestellte Ansatz beschränkt sich jedoch nicht auf die Bildung des Effektivwertes. Es kann auch eine zum Effektivwert proportionale Messgröße erfasst und ausgewertet werden. Mit einem digitalen Verfahren lässt sich kein kontinuierlicher Wert bilden. Die Spannung wird daher zu zeitdiskreten Punkten abgetastet und in beliebig kleine Trapeze oder andere geometrische Formen zerlegt. Eine Trapezform bietet sich dabei an, da der Fehler hier sehr gering und der Rechenaufwand überschaubar ist. Das erfindungsgemäße Verfahren beschränkt sich nicht auf eine Zerlegung der Kurvenform in Trapeze. Es kann eine Zerlegung in beliebige geometrische Formen bzw. eine Zerlegung und Annäherung durch beliebige mathematische Verfahren erfolgen. Im Folgenden wird jedoch nur eine Zerlegung in Trapeze oder trapezähnliche Formen betrachtet.

Erfolgt eine Zerlegung der Kurve in Trapeze oder trapezähnliche Formen, ergeben sich die in Fig. 5e schraffiert eingezeichneten trapezähnlichen Formen. Die Trapeze ergeben sich, wenn eine sinusförmige Wechselspannung mit 50 Hz mit einer Abtastfrequenz von 750 Hz abgetastet wird. Die Trapeze oder trapezähnlichen Formen sind in der Darstellung aus Fig. 5e abwechselnd hell und dunkel markiert. Da der erste und letzte Abtastpunkt nicht mit dem Phasenanschnittswinkel synchronisiert ist, ergibt sich am Anfang und am Ende eines Abtastzyklus jeweils ein Fehler. Dieser Fehler ist in der Fig. 5e als dunkle Fläche markiert. Dabei besteht der Anfang eines Abtastzyklus z.B. aus dem Zünden des Triacs. Das Ende des Abtastzyklus kann z.B. das Unterschreiten des Triac-Haltestromes und somit das Verlöschen des Triacs sein. Je schneller abgetastet wird, d.h. je häufiger ein periodischer Interrupt ausgelöst wird, bei dem die Signale abgetastet werden, desto geringer wird der Fehler. Mit steigender Abtastrate reduziert sich auch der Fehler, der bei den Trapezen oder trapezähnlichen Formen entsteht. Für den quadratischen Mittelwert wird die Fläche eines jeden Trapezes ermittelt und die gebildete Fläche quadriert. Anschließend wird der Mittelwert aller quadrierten Teilflächen einer Halb- oder Vollwelle gebildet. Es entsteht der quadratische Mittelwert der Spannung, der dem Effektivwert der Spannung entspricht. Ein geeigneter Zeitpunkt zur Berechnung des Effektivwertes des Stromes einer Halbwelle / Vollwelle entsteht z.B. nach dem Verlöschen des Triacs. Das Verlöschen des Triacs kann z.B. über das Signal U_{Switch} ausgewertet werden.
- **Abgetasteter Strom** Fig. 5f: In dieser Figur ist der "Strom an der Last", aus Fig. 5c als "abgetasteten Strom" gezeigt. Ziel ist es, aus zum abgetasteten Strom an der Last, den Effektivwert des Stromes an der Last oder eine dem Effektivwert proportionale Messgröße möglichst genau zu erfassen. Eine detaillierte Beschreibung des Verfahrens z.B. zur Effektivwertbildung wurde im Abschnitt "Abgetastete Netzspannung" bereits beschrieben und kann analog auch für die Auswertung des abgetasteten Stroms verwendet werden.

Vorstehend wurde beschrieben, wie die relevanten Messgrößen durch eine analoge Schaltung aufbereitet und einem digitalen Baustein zur Verfügung gestellt werden können. Weiterhin wurden wichtige Signale und deren digitale Aufbereitung und Wandlung in Effektivwerte oder zum Effektivwert proportionale Größen beschrieben. Der Schwerpunkt liegt dabei auf den Signalen "Motorstrom" und "Motorspannung" (Load Voltage). Ein Blick auf die Schaltungsstruktur aus Fig. 4 zeigt, dass die dargestellte Schaltung die Motorspannung nicht direkt erfasst, sondern ein Abgriff am Feld 2 (F2) mit Hilfe von R10 erfolgt.

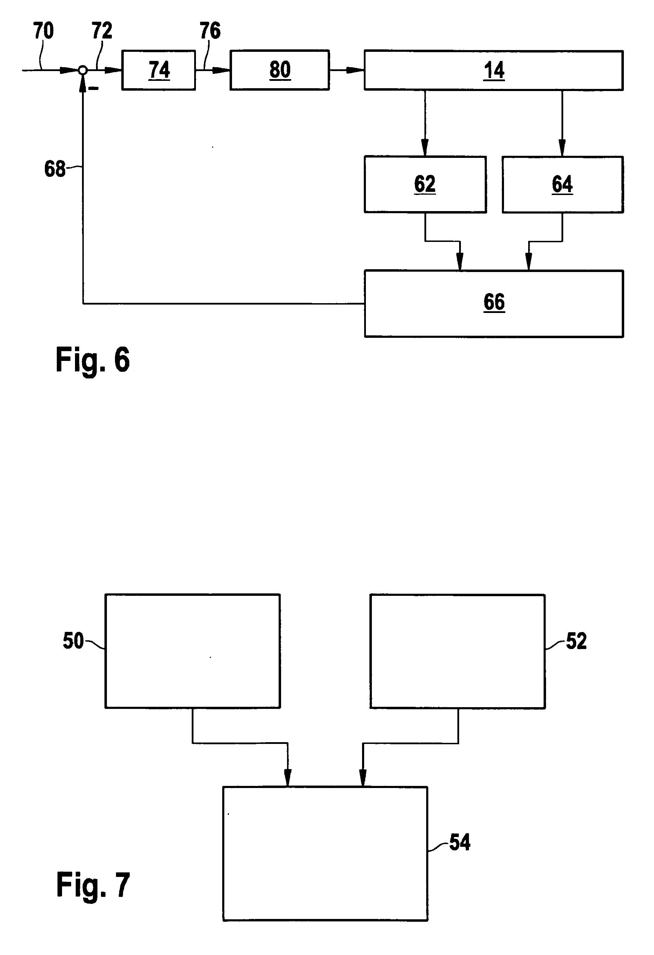

Diese Spannung entspricht der Ankerspannung, plus der Feldspannung über F1 plus dem Spannungsfall am Triac V1 und dem Spannungsfall am Shunt R1. Die Praxis hat gezeigt, dass die am Feld F2 gemessene Spannung vernachlässigbar gegenüber der Ankerspannung ist. Ein Ansatz um die Ankerspannung genauer erfassen zu können, wird jedoch im Abschnitt "Erfassung Ankerspannung" näher beschrieben. Für die Regelung stehen also zwei Messgrößen zur Verfügung: Eine dem Motorstrom entsprechende Größe und eine der Ankerspannung entsprechende Größe. Aus diesen beiden physikalischen Motorgrößen wird der Istwert für die Regelung berechet. Bei dem hier vorgestellten Ansatz wird der Istwert der Regelung (d.h. die Drehzahl) nicht direkt erfasst, sondern von einem Beobachter aus den physikalischen Motorgrößen Ankerspannung (U) und Motorstrom (I) berechnet. Dabei können die beiden Motorgrößen "Motorstrom" und "Ankerspannung" verwendet werden und daraus ein zur Drehzahl proportionales Signal gebildet werden. Das drehzahlproportionale Signal wird im Regelkreis als Istwert verwendet. Es ergibt sich daher für den Regelkreis ein regelungstechnische Ersatzschaltbild für den digitalen U/I-Regler, wie es in Fig. 6 dargestellt ist. Hierbei werden an dem Elektromotor 14 (z.B. einer Gleichstromreihenschlussmaschine) die Motorkenngrößen "Ankerspannung" 62 und "Motorstrom" 64 erfasst und daraus ein drehzahlproportionales Signal 66 berechnet. Dieses Signal 66 wird als Istwert 68 mit einem vordefinierten Sollwert 70 verknüpft (z.B. von diesem abgezogen) und das verknüpfte Signal 72 als Eingangsgröße für einen Regler 74 (z.B. einen PID-Regler) verwendet. Mit dem Regler 74 kann dann ein Regelsignal 76 ausgegeben werden, mit dem ein Steuer- bzw. Stellglied 80, wie beispielsweise die Phasenanschnittsteuerung mit dem Triac, angesteuert wird. Hierdurch wird wieder der Elektromotor 14 gesteuert, sodass die Regelschleife geschlossen ist.

Zuvor wurde beschrieben, wie mit den beiden Motorgrößen "Ankerspannung" und "Motorstrom" ein digitaler Drehzahlregler realisiert werden kann. Der beschriebene Ansatz sieht ebenfalls vor, die beiden Motorgrößen "Ankerspannung" und "Motorstrom" separat auszuwerten und dadurch weitere Anwendungsmöglichkeiten zu eröffnen.

Die Ankerspannung hängt im Wesentlichen von der Drehzahl des Ankers im Feld und von der Feldstärke ab. Die Ankerspannung liefert also eine Auskunft über die Drehzahl der Maschine. Der Motorstrom hängt im Wesentlichen von der Belastung der Maschine ab. Der Motorstrom liefert also eine Aussage über die Belastung der Maschine und das aktuelle Drehmoment.

Eine elektronische Drehmomentbegrenzung lässt sich somit über die Auswertung des Motorstromes realisieren. Auch alle anderen Verfahren, die eine belastungsabhängige Größe benötigen, wie z.B. einen belastungsabhängigen Kipp-Punkt, lassen sich über die Auswertung des Motorstromes realisieren.

Die Ankerspannung wird, wie in Fig. 3 dargestellt, nicht direkt gemessen. Bei der Ankerspannung (U_{Armature} wird er Spannungsfall an Feld 1 (F1), am Triac V1 und am Shunt R1 mit erfasst. In der Praxis hat sich gezeigt, dass die Ankerspannung (U_{Armature} so hinreichend genau erfasst werden kann. Im vorgestellten Ansatz kann vorgesehen werden, die Netzspannung U_{Mains} optional mit zu erfassen. Wird die Netzspannung mit erfasst, kann der Auswertebaustein die Differenz aus U_{Mains} minus U_{Armature} bilden. Die Differenz entspricht der Spannung am Feld 2 (F2).

Ist der Motor symmetrisch aufgebaut, entspricht die Feldspannung 2 (F2) der Feldspannung 1 (F1). Wird also die Differenz aus U_{Mains} minus U_{Armature} gebildet (was der Feldspannung am Feld F1 und am Feld F2 entspricht) und von U_{Armature} abgezogen, geht als Fehler in die Ankerspannung nur noch der Spannungsfall am Shunt und der Spannungsfall am Triac V1 ein. Der Spannungsfall am Shunt U_{Shunt} kann vom Erfassungsbaustein ebenfalls ausgewertet und somit auch korrigiert werden. Der Spannungsfall am Triac kann in der Praxis vernachlässigt werden.

Eine weitere Vereinfachung des digitalen U/I-Reglers ergibt sich durch Weglassen des Shunts. Statt den Spannungsfall am Shunt auszuwerten, kann auch der Spannungsfall an einem Feld ausgewertet werden. Der Spannungsfall an einer Feldwicklung kann, wie oben beschrieben, einfach aus der Differenz U_{Mains} minus U_{Armature} gebildet werden.

Fig. 7 zeigt ein Ablaufdiagramm eines Ausführungsbeispiels der vorliegenden Erfindung in Form eines Verfahrens zum Bereitstellen eines Drehzahl-Detektionssignals und/oder eines Drehmoment-Detektionssignals eines Elektromotors, der eine Reihenschaltung aus zumindest einer Feldwicklung und einer Ankerwicklung umfasst, wobei der Elektromotor zusammen mit einem Schalter zum Einschalten desselben zwischen einem ersten und einem zweiten Versorgungsanschluss in Reihe geschaltet ist. Das Verfahren umfasst dabei einen ersten Schritt des Erfassens 50 eines Motorstroms durch den Elektromotor und das Ausgeben eines entsprechenden Motorstromsignals. Ein weiterer (alternativer) Schritt des Verfahrens besteht in einem Erfassen 52 einer Ankerspannung über die Ankerwicklung und einem Ausgeben eines entsprechenden Ankerspannungssignals. Schließlich umfasst das in Fig. 7 dargestellte Verfahren den Schritt des Auswertens 54 des Motorstromsignals und/oder des Ankerspannungssignals, um eine Integration über das ausgegebene Motorstromsignal und/oder das ausgegebene Ankerspannungssignal durchzuführen, um einen Effektivwert für den Motorstrom und/oder einen Effektivwert über die Ankerspannung zu erhalten und um aus dem Effektivwert des Motorstroms das zum Drehmoment des Elektromotors proportionale Drehmoment-Detektionssignal bereitzustellen und/oder aus dem Effektivwert der Ankerspannung das zur Drehzahl des Elektromotors proportionale Drehzahl-Detektionssignal bereitzustellen.

Nachfolgend wird eine Zusammenfassung der wichtigsten Aspekte der Erfindung gegeben, die sich auch in wesentlichen Aspekten oder Ausführungsformen der Erfindung wieder finden:
- Der vorgestellte Ansatz bietet die Möglichkeit, die relevanten Motorkenngrö-βen Motorstrom und Ankerspannung mit nur einem zusätzlichen Abgriff am Anker der Gleichstromreihenschlussmaschine (Universalmotor) zu erfassen.
- Die relevanten Motorkenngrößen können über eine einfache Analogschaltung aufbereitet und mit Hilfe eines Abtastverfahrens oder eines ähnlichen Verfahrens in digitale Größen umgesetzt werden.
- Der vorgestellte Ansatz bietet die Möglichkeit, dass die Signale in der positiven und negativen Halbwelle erfasst und ausgewertet werden können. Es ist jedoch für die Anwendung nicht erforderlich, beide Halbwellen auszuwerten, d.h. es kann selbstverständlich auch nur eine der beiden Halbwellen ausgewertet werden.
- Der vorgestellte Ansatz bietet die Möglichkeit, dass die Netzspannung mit erfasst werden kann und eine Korrektur der Regelung oder der Regeleigenschaften in Abhängigkeit von der Netzspannung möglich ist.
- Der vorgestellte Ansatz bietet die Möglichkeit, dass aus den Motorgrößen Motorstrom und Ankerspannung ein zur Drehzahl proportionales Signal erzeugt wird, welches als Eingangsgröße für eine Regelung verwendet werden kann.
- Der vorgestellte Ansatz bietet die Möglichkeit, dass das zur Drehzahl proportionale Signal auch separat für die Realisierung von Zusatzfunktionen verwendet werden kann.
- Der vorgestellte Ansatz bietet die Möglichkeit, die Motorgrößen Motorstroms" und "Ankerspannung" separat auszuwerten und z.B. eine Drehmomentbegrenzung, einen Kipppunkt oder ähnliche Drehzahl oder belastungsabhängige Funktionen zu realisieren.
- Der vorgestellte Ansatz bietet die Möglichkeit, dass sich das Versorgungsspannungskonzept im Vergleich zum Ansatz mit einem brückengesteuerten Drehzahl-Drehmomentregler für Universal-Hauptschlußmotoren mit Wechselstrom-Vollwellenspeisung wesentlich vereinfacht.

## Patentansprüche

1. Motorkenngrößen-Detektor (10) zum Bereitstellen eines Drehmoment-Detektionssignals (26) eines Elektromotors (14), der eine Reihenschaltung aus zumindest einer Feldwicklung (F1, F2) und einer Ankerwicklung (16) umfasst, wobei der Elektromotor (14) zwischen einem ersten (N) und einem zweiten (L) Versorgungsanschluss geschaltet ist und wobei der Motorkenngrößen-Detektor (10) folgende Merkmale umfasst:
- eine Motorstrom-Erfassungseinheit (12), die ausgebildet ist, um einen Motorstrom durch den Elektromotor (14) zu erfassen und ein entsprechendes Motorstromsignal (20) auszugeben und
- eine Auswerteeinheit (22), die ausgebildet ist, um eine Integration über das ausgegebene Motorstromsignal (20) durchzuführen, um einen Effektivwert für den Motorstrom zu erhalten, wobei die Auswerteeinheit (22) ferner ausgebildet ist, um aus dem Effektivwert des Motorstroms das dem Drehmoment des Elektromotors (14) proportionale Drehmoment-Detektionssignal (26) bereitzustellen.

2. Motorkenngrößen-Detektor (10) gemäß Anspruch 1, **dadurch gekennzeichnet, dass** die Auswerteeinheit (22) ausgebildet ist, um das ausgegebene Motorstromsignal (20) mit einer vordefinierten Abtastfrequenz abzutasten und die Integration mit Mitteln der digitalen Signalverarbeitung auszuführen.

3. Motorkenngrößen-Detektor (10) gemäß Anspruch 2, **dadurch gekennzeichnet, dass** die Auswerteeinheit (22) ausgebildet ist, um für die Integration eine Interpolation der abgetasteten Werte des Motorstromsignals (20) durchzuführen und die Integration unter Verwendung von sich durch die Interpolation ergebenden trapezförmigen Strukturen zwischen den interpolierten abgetasteten Motorstromsignalwerten und Bezugswerten auszuführen.

4. Motorkenngrößen-Detektor (10) gemäß einem der vorhergehenden Ansprüche, wobei zwischen den ersten Versorgungsanschluss (N) und den Elektromotor (14) ein Phasenanschnitt-Schalter (V1) geschaltet ist, **dadurch gekennzeichnet, dass** die Auswerteeinheit (22) ausgebildet ist, um einen Spannungsabfall zwischen dem ersten Versorgungsanschluss (N) und dem Elektromotor (14) zu bestimmen und diesen bestimmten Spannungsabfall bei dem Bereitstellen des Drehmorrient-Detektionssignals (26) zu verwenden.

5. Motorkenngrößen-Detektor (10) gemäß einem der vorhergehenden Ansprüche, **dadurch gekennzeichnet, dass** die Auswerteeinheit (22) ausgebildet ist, um das Drehmoment-Detektionssignal (26) unter Verwendung eines ausgegebenen Ankerspännungssignals und des ausgegebenen Motorstromsignals bereitzustellen.

6. Motorregler mit folgenden Merkmalen:
- einem Motorkenngrößen-Detektor (10) gemäß einem der vorhergehenden Ansprüche; und
- einem Regler, der ausgebildet ist, um auf der Basis des bereitgestellten des bereitgestellten Drehmoment-Detektionssignals (26) den Elektromotor (14) entsprechend einer vorgegebenen Regelcharakteristik zu regeln

7. Verfahren zum Bereitstellen eines Drehmoment-Detektionssignals (26) eines Elektromotors (14), der eine Reihenschaltung aus zumindest einer Feldwicklung (F1, F2) und einer Ankerwicklung (16) umfasst, wobei der Elektromotor (14) zwischen einem ersten (N) und einem zweiten (L) Versorgungsanschluss geschaltet ist und wobei das Verfahren folgende Schritte umfasst:
- Erfassen (50) eines Motorstroms durch den Elektromotor (14) und Ausgeben eines entsprechenden Motorstromsignals (20) und
- Auswerten (54) des Motorstromsignals, um eine Integration über das ausgegebene Motorstromsignal (20) durchzuführen, um einen Effektivwert für den Motorstrom zu erhalten und um aus dem Effektivwert des Motorstroms das dem Drehmoment des Elektromotors (14) proportionale Drehmoment-Detektionssignal (26) bereitzustellen.

8. Computerprogramm mit Programmcode zur Durchführung des Verfahrens gemäß Anspruch 7, wenn das Computerprogramm auf einem Computer ausgeführt wird.

## Claims

1. Motor characteristic variable detector (10) for providing a torque detection signal (26) of an electric motor (14) which comprises a series circuit comprising at least one field winding (F1, F2) and an armature winding (16), the electric motor (14) being connected between a first supply connection (N) and a second supply connection (L), and the motor characteristic variable detector (10) comprising the following features:
- a motor current detection unit (12) which is designed to detect a motor current through the electric motor (14) and to output a corresponding motor current signal (20), and
- an evaluation unit (22) which is designed to integrate the output motor current signal (20) in order to obtain a root mean square value for the motor current, the evaluation unit (22) also being designed to provide the torque detection signal (26) which is proportional to the torque of the electric motor (14) from the root mean square value of the motor current.

2. Motor characteristic variable detector (10) according to Claim 1, **characterized in that** the evaluation unit (22) is designed to sample the output motor current signal (20) at a predefined sampling frequency and to carry out the integration process using digital signal processing means.

3. Motor characteristic variable detector (10) according to Claim 2, **characterized in that** the evaluation unit (22) is designed to interpolate the sampled values of the motor current signal (20) for the integration process and to carry out the integration process using trapezoidal structures which result from the interpolation between the interpolated sampled motor current signal values and reference values.

4. Motor characteristic variable detector (10) according to one of the preceding claims, a phase gating switch (V1) being connected between the first supply connection (N) and the electric motor (14), **characterized in that** the evaluation unit (22) is designed to determine a voltage drop between the first supply connection (N) and the electric motor (14) and to use this particular voltage drop when providing the torque detection signal (26).

5. Motor characteristic variable detector (10) according to one of the preceding claims, **characterized in that** the evaluation unit (22) is designed to provide the torque detection signal (26) using an armature voltage signal which has been output and the motor current signal which has been output.

6. Motor controller having the following features:
- a motor characteristic variable detector (10) according to one of the preceding claims; and
- a controller which is designed to control the electric motor (14) according to a predefined control characteristic on the basis of the torque detection signal (26) provided.

7. Method for providing a torque detection signal (26) of an electric motor (14) which comprises a series circuit comprising at least one field winding (F1, F2) and an armature winding (16), the electric motor (14) being connected between a first supply connection (N) and a second supply connection (L), and the method comprising the following steps of:
- detecting (50) a motor current through the electric motor (14) and outputting a corresponding motor current signal (20), and
- evaluating (54) the motor current signal in order to integrate the output motor current signal (20) in order to obtain a root mean square value for the motor current and to provide the torque detection signal (26) which is proportional to the torque of the electric motor (14) from the root mean square value of the motor current.

8. Computer program having program code for carrying out the method according to Claim 7 when the computer program is executed on a computer.

## Revendications

1. Détecteur de grandeur caractéristique de moteur (10) destiné à fournir un signal de détection de couple (26) d'un moteur électrique (14), lequel comprend un circuit série composé d'au moins un enroulement d'excitation (F1, F2) et un enroulement d'induit (16), le moteur électrique (14) étant branché entre une première (N) et une deuxième (L) borne d'alimentation et le détecteur de grandeur caractéristique de moteur (10) comprenant les caractéristiques suivantes :
- une unité de détection de courant de moteur (12) qui est configurée pour détecter un courant de moteur à travers le moteur électrique (14) et pour délivrer un signal de courant de moteur (20) correspondant et
- une unité d'interprétation (22) qui est configurée pour réaliser une intégration sur le signal de courant de moteur (20) délivré afin d'obtenir une valeur effective du courant de moteur, l'unité d'interprétation (22) étant en outre configurée pour fournir, à partir de la valeur effective du courant de moteur, le signal de détection de couple (26) proportionnel au couple du moteur électrique (14).

2. Détecteur de grandeur caractéristique de moteur (10) selon la revendication 1, **caractérisé en ce que** l'unité d'interprétation (22) est configurée pour échantillonner le signal de courant de moteur (20) avec une fréquence d'échantillonnage prédéfinie et pour réaliser l'intégration avec des moyens de traitement numérique du signal.

3. Détecteur de grandeur caractéristique de moteur (10) selon la revendication 2, **caractérisé en ce que** l'unité d'interprétation (22) est configurée pour réaliser l'intégration d'une interpolation des valeurs échantillonnées du signal de courant de moteur (20) et pour réaliser l'intégration en utilisant les structures de forme trapézoïdale résultant de l'interpolation entre les valeurs échantillonnées interpolées du signal de courant de moteur et des valeurs de référence.

4. Détecteur de grandeur caractéristique de moteur (10) selon l'une des revendications précédentes, un commutateur d'angle de phase (V1) étant branché entre la première borne d'alimentation (N) et le moteur électrique (14), **caractérisé en ce que** l'unité d'interprétation (22) est configurée pour déterminer une chute de tension entre la première borne d'alimentation (N) et le moteur électrique (14) et utiliser cette chute de tension déterminée lors de la fourniture du signal de détection de couple (26).

5. Détecteur de grandeur caractéristique de moteur (10) selon l'une des revendications précédentes, **caractérisé en ce que** l'unité d'interprétation (22) est configurée pour fournir le signal de détection de couple (26) en utilisant un signal de tension d'induit délivré et le signal de courant de moteur délivré.

6. Régulateur de moteur ayant les caractéristiques suivantes :
- un détecteur de grandeur caractéristique de moteur (10) selon l'une des revendications précédentes ; et
- un régulateur qui est configuré pour réguler le moteur électrique (14) conformément à une caractéristique de régulation prédéfinie en se basant sur le signal de détection de couple (26) fourni.

7. Procédé pour fournir un signal de détection de couple (26) d'un moteur électrique (14), lequel comprend un circuit série composé d'au moins un enroulement d'excitation (F1, F2) et un enroulement d'induit (16), le moteur électrique (14) étant branché entre une première (N) et une deuxième (L) borne d'alimentation et le procédé comprenant les étapes suivantes :
- détection (50) d'un courant de moteur à travers le moteur électrique (14) et délivrance d'un signal de courant de moteur (20) correspondant et
- interprétation (54) du signal de courant de moteur pour réaliser une intégration sur le signal de courant de moteur (20) délivré afin d'obtenir une valeur effective du courant de moteur et afin de fournir le signal de détection de couple (26) proportionnel au couple du moteur électrique (14) à partir de la valeur effective du courant de moteur.

8. Programme informatique comprenant un code de programme pour mettre en oeuvre le procédé selon la revendication 7 lorsque le programme informatique est exécuté sur un ordinateur.
